# EUROPEAN PATENT SPECIFICATION

(11) **EP 1 855 941 B1**
(45) Date of publication and mention of the grant of the patent: **08.04.2015**
(21) Application number: 06716806.2
(22) Date of filing: 24.02.2006
(51) Int. Cl.: B64C 27/08, B64C 29/00, B64C 15/00, B64C 27/20, B64C 39/02, B64D 35/04

(54) **PROPULSION DEVICE**
ANTRIEBSEINRICHTUNG
DISPOSITIF DE PROPULSION

(30) Priority: 04.03.2005 NZ 53863005; 26.10.2005 US 259814
(43) Date of publication of application: 21.11.2007
(73) Proprietor: Martin Aircraft Company Limited, Christchurch (NZ)
(72) Inventor: MARTIN, Glenn, Neil, Christchurch 8 (NZ)
(74) Representative: Thacker, Darran Ainsley
(86) International application number: PCT/NZ2006/000029
(87) International publication number: WO 2006/093420

(56) References cited:
- WO-A1-00/35751
- WO-A2-02/47978
- DE-A1- 4 302 791
- FR-A1- 2 667 568
- NL-C1- 1 014 649
- US-A- 2 417 896
- US-A- 3 184 183
- US-A1- 2002 113 165
- DATABASE WPI Week 200042, Derwent Publications Ltd., London, GB; Class Q25, AN 2000-481413, XP008114569 & RU 2 135 393 C1 (NIKOLAICHUK A P) 27 August 1999

## Description

### Field of the Invention

The present invention relates to a vertical take-off and landing personal flight device, i.e. a device which can be secured to the pilot rather like a jet belt, and which gives the pilot controllable powered flight.

### Background of the Invention

Personal flight devices were developed in the 1960s and 1970s, but were essentially rocket based devices (jet belts) which gave extremely short flight times (typically about 26 seconds) and were difficult to control. Further, these devices were fuelled by rocket fuel which is intrinsically dangerous.

In a related type of device fuel is fed to a catalyst bed to produce hot gas which is distributed between two spaced counter-rotating turbines to generate vertical thrust from the turbine exhausts. The device is steered by shrouds or deflector rings pivoted to the base of each turbine.

More recently, a number of personal flight devices have been proposed which use ducted fans as their means of propulsion:- for example the device of WO 02/47978 which includes a pair of ducted fans and which is steered and/or trimmed by tilting the ducted fans relative to the pilot. A device of this type requires a relatively heavy and complex mounting system for the fans, to enable this movement, and this adds a great deal of weight to the device and also makes it more susceptible to damage. Further, in this design the two fans are contra rotating, and the device therefore requires a gearbox, which adds considerably to the weight of the device.

A broadly similar type of design has been proposed, using shrouded propellers rather than ducted fans.

As the terms are used in this specification, the distinction between a 'shrouded propeller' and a 'ducted fan' essentially is that a ducted fan comprises one or more rotating aerofoils or fans (single or multi-bladed) mounted completely within a duct; the duct increases the overall efficiency of the fan. A shrouded propeller comprises a rotating aerofoil or propeller which is surrounded by a shroud, the only function of the shroud being to protect the propeller - the shroud does not appreciably affect the efficiency of the propeller.

A further proposal describes a device which includes a pair of ducted fans. In this device, the fans are rigidly secured to the supporting harness, and steering is achieved by control flaps mounted adjacent to the outlet of each fan. However, in this design the two fans are contra-rotating and thus have to be driven via a gearbox using a relatively complex rigid transmission system; this adds considerable weight to the device.

Other prior art proposals have been for single shrouded propellers or ducted fans. Single propeller/fan devices have the drawback that the propeller/fan has to be extremely large to provide adequate lift, and to balance the devices the pilot generally has the propeller/fan above or below him, which is far from ideal from a safety point of view. A further drawback is that the thrust from a single propeller/fan has to be split in some way to give steering and this tends to result in high frictional losses in the steering tubes or ducts.

### Summary of Invention

An object of the present invention is a personal flight device which overcomes the disadvantages of the prior art devices described above, and which provides a lightweight yet powerful personal flight device which is comparatively safe to use.

The present invention provides a personal flight device which includes:-
- a housing which is securable to a pilot;
- at least one pair of fans, one fan of the pair mounted to one side of the housing, and the other fan of the pair mounted to the other side of the housing; wherein each fan rotates about an axis of rotation, wherein the axis of rotation of each fan is fixed relative to the housing; and
- at least one engine mounted on the housing for driving the fans, wherein both fans rotate in the same direction for producing thrust.

It is envisaged that the device probably would use only a single engine and a single pair of fans, since it is important for most applications to keep the overall weight of the device as low as possible. However, it would be possible to use more than one pair of fans, each pair driven by its own engine or both/all pairs driven by a single engine. Preferably, each fan would be a ducted fan, but it would be possible to use a non-ducted fan.

Preferably, the housing is securable to a pilot by means of a harness, and includes protective shielding between the pilot and the engine and fans.

The engine may be any suitable reliable, robust, lightweight engine e.g. a two-stroke or a four-stroke internal combustion engine, rotary engine, or a gas turbine.

The drive means may be any reliable lightweight drive means e.g. a chain drive, a fluid drive or a belt drive. Preferably, the drive means is a flexible belt drive, most preferably a toothed belt drive or a micro-V belt drive. A belt drive is preferred because a belt drive may easily be inspected by a pilot to check for wear or damage, and modern belt drives give a low-weight high-efficiency drive. For additional security, two or more drive means may be used in parallel.

Preferably, the device also includes steering means, which may be any suitable means, e.g. a steering vane on one or more fans; a moveable steering shroud around the lower end of one or more fans; or steering jets. Preferably, the steering means comprises a steering vane on each fan, arranged to direct the airflow leaving the fan in use, and controllable by the pilot.

### Brief Description of the Drawings

By way of example only, a preferred embodiment of the present invention is described in detail with reference to the accompanying drawings in which:-
Fig. 1 is a diagrammatic front view of a device in accordance with the present invention;
Fig. 2 is a plan view from above of the device of Fig. 1;
Fig. 3 is a side view of the device of Fig. 1;
Fig. 4 is a view of one ducted fan from below;
Fig. 5 is a side view of the fan of Fig. 4;
Fig. 6 is a diagram of the drive arrangement;
Fig. 7 is a diagram of part of the control system;
Fig. 8a and b are diagrams of two different versions of stators;

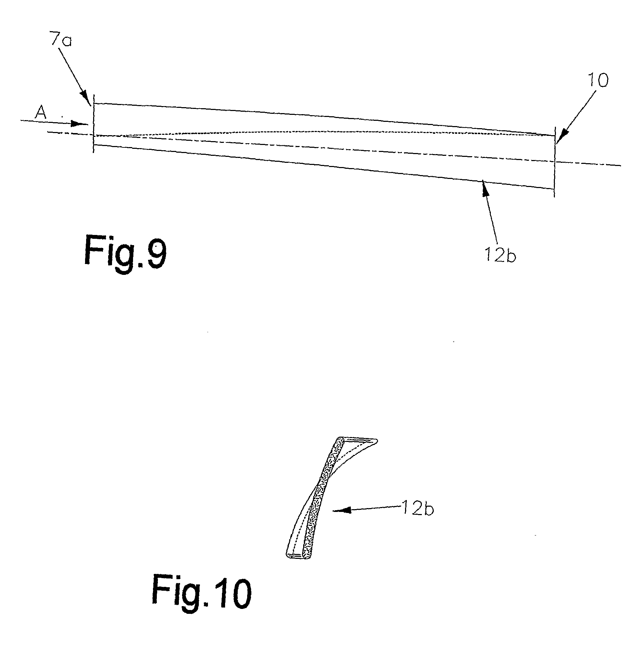

Fig. 9 is a plan view of a stator of Fig. 8b on a larger scale; and
Fig. 10 is a view in the direction of Arrow A of Fig. 9.

### Detailed Description of the Invention

Referring to the drawings, a personal flight device 1 includes a pair of ducted fans 2,3 which are supported and spaced apart by a central housing 4, which also supports an engine 6 and a fuel tank (not visible).

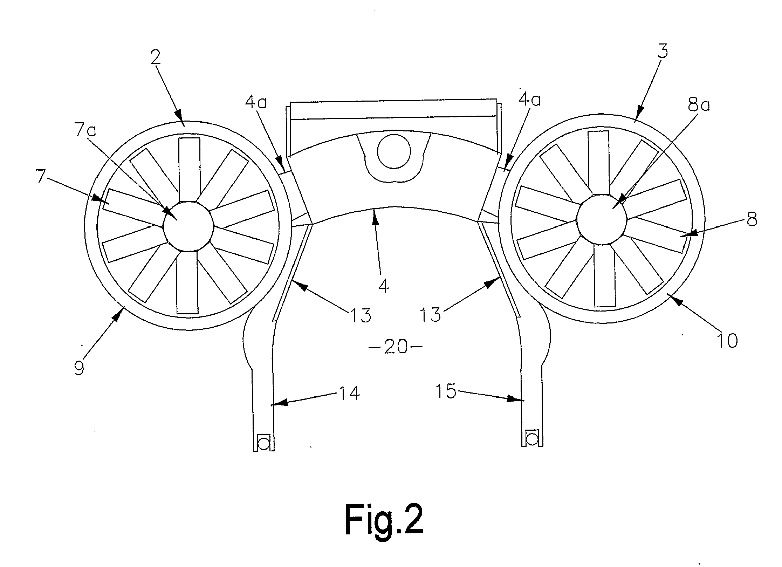

The ducted fans 2,3 are of known design and consist of a central multi-blade fan 7,8 mounted on, and rotatable with, a hub 7a,8a, inside a concentric cylindrical duct 9, 10. The ducts 9,10 are rigidly mounted on the housing 4 by mounting brackets 4a (visible in Fig. 2 only) and are oriented such that in the "at rest" position shown in Fig.s 1 and 3, (i.e. when the device is resting on the ground) the axis of rotation of each fan is substantially vertical. The ends of the ducts 9,10 are depicted as open, but may in fact be covered by a protective grill or mesh.

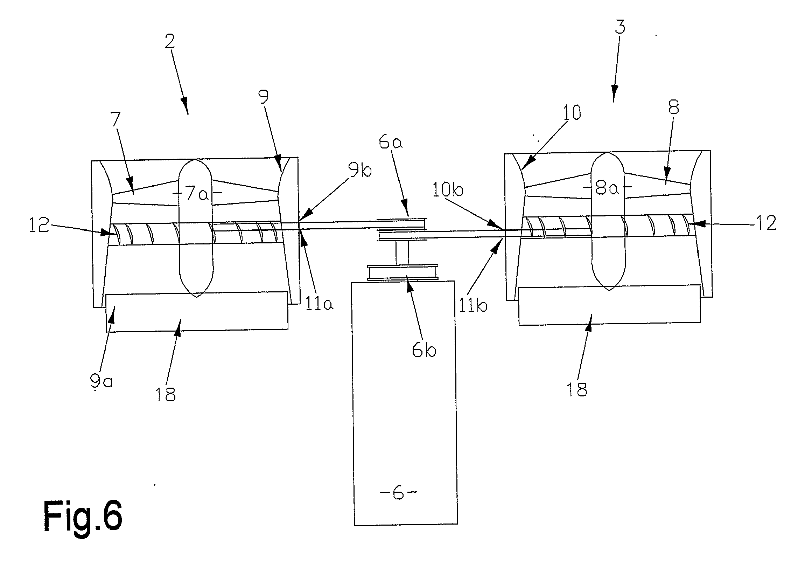

The fans 7,8 are driven from the engine 6 by a drive means in the form of a pair of toothed drive belts 11a, 11b to the corresponding hub 7a,8a. The toothed belt drive is shown (diagrammatically) in Fig.s 4 and 6. As shown in Fig. 6, the engine 6 drives a drive pulley 6a through a flexible coupling 6b, to dampen torsional vibration from the engine 6. Two drive belts 11a,11b are engaged with the drive pulley 6a, one belt alongside the other.

The first drive belt 11 a passes around the pulley 6a, through an aperture 9b in the duct 9 and around the hub 7a to drive the fan 7. The second drive belt 11 b passes around the pulley 6a, through an aperture 10b in the duct 10, and around the hub 8a to drive the fan 8. In use, both fans 7,8 are rotated in the same direction, but the airflow from the bottom 9a, 10a, of each duct 9,10 is made linear (i.e. substantially parallel to the longitudinal axis of the corresponding fan) by the use of a row of stators 12. The stators 12 are spaced, and extend radially around the inner circumference of each duct 9,10 below the corresponding fan 7,8. Each stator 12 is a 'spoke' which extends radially from the inner wall of the duct towards the hub.

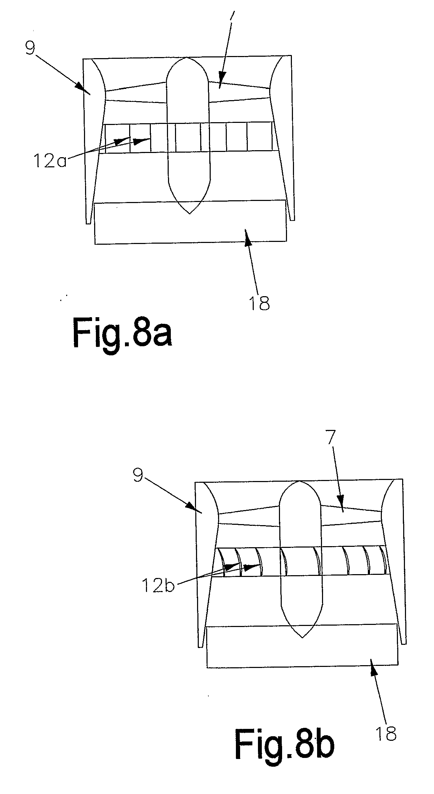

Fig. 8a shows the simplest arrangement of stators, in which each stator is a flat parallel-sided plate, with the length of each plate extending radially from the inner wall of the duct towards the hub.

Fig.s 8b,9 and 10 illustrate a more aerodynamically efficient design of stator 12b, in which each stator 12b is a curved aerofoil cross-section plate, one end of which is secured to the inner wall of the duct and the other end of which is secured to the hub. As shown in Fig.s 9 and 10, each stator 12b twists along its longitudinal axis from the hub to the duct. Stators of this design have a higher efficiency than the simple flat stators 12a, but are more expensive to produce and to fit.

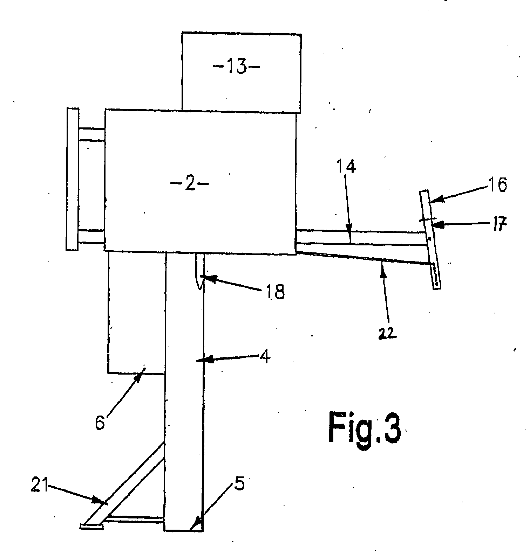

The housing 4 is slightly wider than the shoulder width of the pilot, and approximately the same height as the pilot. In the "at rest" position shown in Fig.s 1 and 3 of the drawings, the lower edge 5 of the housing 4 rests on the ground and is stabilised by a pair of angled rear supports 21 (Fig. 3 only).

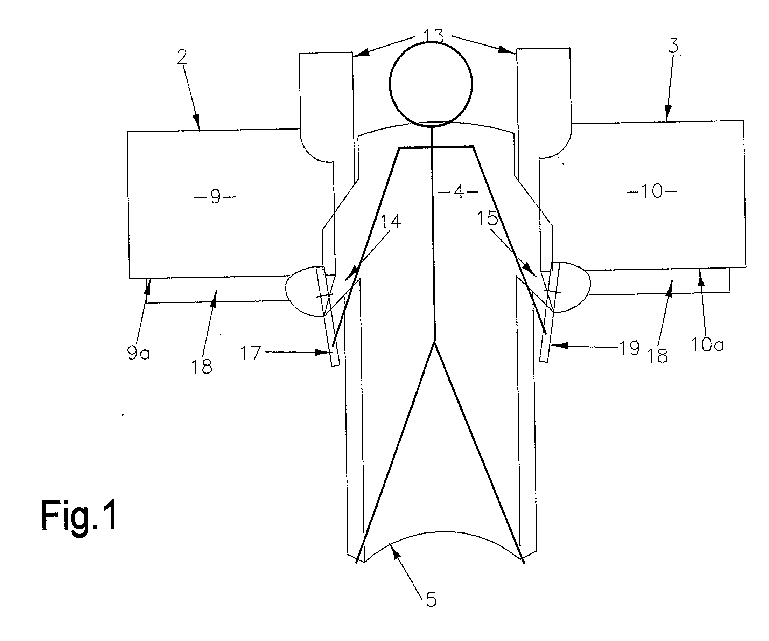

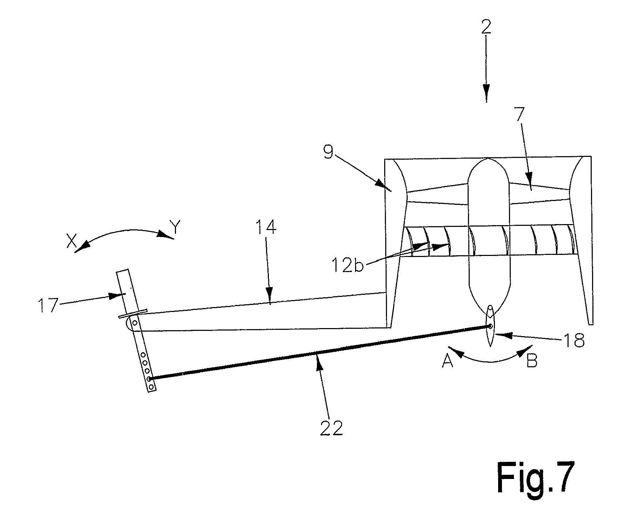

The housing 4 provides head shields 13 and armrests 14, 15 (Fig. 1 and 2). The armrest 14 incorporates a twist grip throttle 16 and a control lever 17. The twist grip throttle 16 is connected to the engine 6 and is used to control the acceleration of the engine in known manner. The control lever 17 is connected to the steering vane 18 for the fan 2 by a rod 22. As shown in greater detail in Fig. 7, the lever 17 is pivoted to the outer end of the arm rest 14, and the end of the lever 17 below the arm rest 14 is connected to one end of the rod 22, the other end of which is connected adjacent the lower end of the steering vane 18.

The control lever 19 is connected to the arm rest 15 and the steering vane for the fan 3 in the same manner.

The control arrangement for the steering vanes is a simple lever control:- in the case of fan 2, movement of the control lever 17 in the direction of arrow X moves the steering vane in the direction of arrow B, and movement of the lever 17 in the direction of arrow Y moves the steering vane in the direction of arrow A. Alternatively, a cable could be used in place of each rod. Another possibility is to use a non-mechanical control system, by substituting an electric actuator for controlling each steering vane.

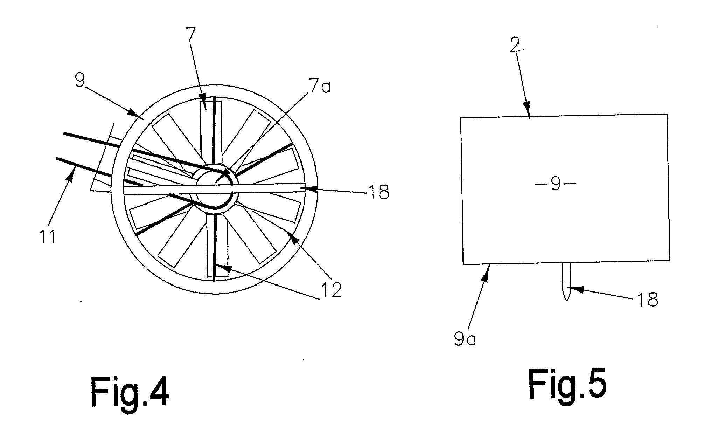

Each steering vane is mounted diametrically across the lower edge 9a,10a, of the corresponding duct 9,10 and is arranged to pivot about an axis substantially perpendicular to the axis of rotation of the corresponding fan and hub. Each vane has an aerofoil cross section. Each vane projects partly below the lower edge of the corresponding duct, as shown in Fig. 5.

In use, the pilot stands in the space 20 (Fig. 2) and is strapped to the device by means of a parachute type a harness (not shown) which is mounted on the housing 4. Once strapped in, the pilot starts the engine 6 to rotate the fans 7,8 within the ducts 9,10 to give vertical lift to the device. The amount of lift is governed by the acceleration of the engine 6, which is controlled by the throttle 16. Forward movement is given by angling the control vanes of the fans 2,3 using the control levers 17,19. The steering vanes also are used to turn the device left or right.

Rotating both fans 7, 8 in the same direction means that the fans can be driven directly from the engine and there is no need for a gearbox to alter the direction of drive. This saves a great deal of additional weight, and also eliminates a component which would need maintenance and be a possible source of failure. Rotating both fans in the same direction would impart torque to the device were it not for the stators which render the airflow leaving the fans 2, 3 substantially linear.

The device is fitted with a parachute (not shown) which in emergencies can be opened by the pilot to bring the device and the pilot together safely to the ground.

It is envisaged that the primary use of the above-described device would be a one-person transport. However, it would be possible to substitute any of a range of remote-control devices for the pilot, and to operate the device remotely.

## Claims

1. A personal flight device (1) which includes:
- a housing (4) which is securable to a pilot;
- at least one pair of fans (7, 8), one fan of the pair mounted to one side of the housing (4), and the other fan of the pair mounted to the other side of the housing; wherein each fan (7, 8) rotates about an axis of rotation; **characterised in that** the axis of rotation of each fan is fixed relative to the housing (4); and
- at least one engine (6) is mounted on the housing (4) for driving the fans (7, 8), such that both fans rotate in the same direction for producing thrust.

2. The personal flight device (1) as claimed in claim 1, wherein each fan (7, 8) is secured to the housing (4) such that the axis of rotation of each fan is substantially vertical when the device is secured to a pilot standing upright.

3. The personal flight device (1) as claimed in claim 1 or claim 2, further comprising a steering vane (18) coupled to at least one fan (7, 8), said vane being controllable for directing the airflow leaving the at least one fan.

4. The personal flight device (1) as claimed in claim 3, wherein the steering vane (18) comprises a plate having an aerofoil cross-section and mounted diametrically across a lower edge (9a, 10a) of a duct (9,10) surrounding said at least one fan (7, 8).

5. The personal flight device (1) as claimed in claim 3, wherein the housing (4) incorporates:
- a mounting for a throttle control (16); and
- a control (17,19) for the steering vane (18).

6. The personal flight device (1) as claimed in claim 5, wherein the throttle control mounting (16) and the control (17,19) for the steering vane (18) are mounted on armrests (14, 15) extending from the housing (4).

7. The personal flight device (1) as claimed in any one of the preceding claims, wherein the housing (4) comprises a protective shielding (13) for shielding the pilot from the engine (6) and fans (7, 8).

8. The personal flight device (1) as claimed in any one of the preceding claims, wherein the housing (4) comprises a harness for securing the device to a pilot.

9. The personal flight device (1) as claimed in any one of the preceding claims, wherein each fan (7, 8) is a ducted fan comprising a duct (9, 10) surrounding the fan and defining an intake.

10. The personal flight device (1) as claimed in claim 9, wherein said intake is covered with a mesh.

11. The personal flight device (1) as claimed in any one of the preceding claims, wherein the engine (6) is selected from the group consisting of two-stroke internal combustion engines, four-stroke internal combustion engines, rotary engines, and gas turbine engines.

12. The personal flight device (1) as claimed in any one of the preceding claims, further comprising a drive means driven by the at least one engine (6), said driven drive means driving the at least one pair of fans (7, 8).

13. The personal flight device (1) as claimed in claim 12, wherein the drive means comprises a single drive.

14. The personal flight device (1) as claimed in claim 12, wherein the drive means comprises a double drive.

15. The personal flight device (1) as claimed in claim 12, wherein the drive means comprises a drive selected from the group consisting of chain drives, fluid drives, and belt drives.

16. The personal flight device (1) as claimed in claim 12, wherein the drive means is a toothed belt drive.

17. The personal flight device (1) as claimed in claim 12, wherein the drive means is a micro-V belt drive.

18. The personal flight device (1) as claimed in any one of the preceding claims, wherein the device consists of only a single pair of ducted fans (7, 8) and a single engine (6).

19. The personal flight device (1) as claimed in any one of the preceding claims, further comprising a parachute coupled to the housing (4).

20. The personal flight device (1) as claimed in any one of the preceding claims, wherein each fan (7, 8) is mounted within a duct (9, 10), wherein the device further comprises a set of stators (12) arranged in each fan duct to straighten the airflow leaving that fan.

21. The personal flight device (1) as claimed in claim 20, wherein the stators (12) of each set have one end secured to an inner wall of the duct (9, 10) and another end secured to a hub of the fan (7, 8) within the duct.

22. The personal flight device (1) as claimed in claim 20, wherein each stator (12) is a flat parallel sided plate.

23. The personal flight device (1) as claimed in claim 20, wherein each stator (12) comprises a curved aerofoil cross-section.

24. The personal flight device (1) as claimed in claim 1 further comprising a duct (9, 10) surrounding each fan (7, 8).

25. The personal flight device (1) as claimed in claim 24 wherein each duct (9, 10) is fixed relative to the housing (4).

26. The personal flight device (1) as claimed in claim 24 further comprising a set of stators (12) associated with each fan (7, 8) and arranged to straighten the airflow leaving that fan.

27. The personal flight device (1) as claimed in claim 24 further comprising a steering vane (18) for steering an airflow generated by one of the fans (7, 8) for steering the device.

28. The personal flight device (1) as claimed in claim 27 further comprising a second steering vane (18) for steering an airflow generated by the other of said fans (7, 8) for steering the device.

29. The personal flight device (1) as claimed in claim 28 wherein each steering vane (18) is mounted on the duct (9,10) of the fan (7,8) whose airflow said vane steers.

## Patentansprüche

1. Personenfluggerät (1), welches aufweist:
- ein Gehäuse (4), welches an einem Piloten befestigbar ist;
- mindestens ein Paar Propeller (7, 8), wobei ein Propeller des Paares an einer Seite des Gehäuses (4) und der andere Propeller des Paares an der anderen Seite des Gehäuses montiert ist; wobei jeder Propeller (7, 8) um eine Drehachse rotiert; **dadurch gekennzeichnet, dass** die Drehachse jedes Propellers relativ zum Gehäuse (4) fixiert ist; und
- mindestens eine Maschine (6), am Gehäuse (4) montiert, um die Propeller (7, 8) so anzutreiben, dass beide Propeller in dieselbe Richtung drehen, um Schub zu erzeugen.

2. Personenfluggerät (1) nach Anspruch 1, wobei jeder Propeller (7, 8) so am Gehäuse (4) befestigt ist, dass die Drehachse jedes Propellers im Wesentlichen vertikal ist, wenn das Gerät an einem aufrecht stehenden Piloten befestigt ist.

3. Personenfluggerät (1) nach Anspruch 1 oder Anspruch 2, ferner ein an den mindestens einen Propeller (7, 8) gekoppeltes Steuerruder (18) aufweisend, wobei das Ruder verstellbar ist, um den Luftstrom, der den mindestens einen Propeller verlässt, zu lenken.

4. Personenfluggerät (1) nach Anspruch 3, wobei das Steuerruder (18) eine Platte aufweist, die einen Flügelquerschnitt hat und diametral quer über einer unteren Kante (9a, 10a) eines Mantels (9, 10), der den mindestens einen Propeller (7, 8) umgibt, montiert ist.

5. Personenfluggerät (1) nach Anspruch 3, wobei das Gehäuse (4) besitzt:
- eine Befestigung für eine Drosselsteuerung (16); und
- eine Steuerung (17, 19) für das Steuerruder (18).

6. Personenfluggerät (1) nach Anspruch 5, wobei die Drosselsteuerungsbefestigung (16) und die Steuerung (17, 19) für das Steuerruder (18) auf Armstützen (14, 15), die sich vom Gehäuse (4) aus erstrecken, montiert sind.

7. Personenfluggerät (1) nach einem der vorangegangenen Ansprüche, wobei das Gehäuse (4) eine Schutzabschirmung (13) zum Abschirmen des Piloten vor der Maschine (6) und den Propellern (7, 8) aufweist.

8. Personenfluggerät (1) nach einem der vorangegangenen Ansprüche, wobei das Gehäuse (4) ein Geschirr zum Befestigen des Gerätes an einem Piloten aufweist.

9. Personenfluggerät (1) nach einem der vorangegangenen Ansprüche, wobei jeder Propeller (7, 8) ein Mantelpropeller ist, der einen den Propeller umgebenden Mantel (9, 10) aufweist und einen Einlass festlegt.

10. Personenfluggerät (1) nach Anspruch 9, wobei der Einlass mit einem Gitter bedeckt ist.

11. Personenfluggerät (1) nach einem der vorangegangenen Ansprüche, wobei die Maschine (6) aus der Gruppe, die aus Zweitakt-Verbrennungsmaschinen, Viertakt-Verbrennungsmaschinen, Rotationsmaschinen und Gasturbinenmaschinen besteht, ausgewählt wird.

12. Personenfluggerät (1) nach einem der vorangegangenen Ansprüche, ferner ein Antriebsmittel aufweisend, das von der mindestens einen Maschine (6) angetrieben wird, wobei das angetriebene Antriebsmittel das mindestens eine Paar Propeller (7, 8) antreibt.

13. Personenfluggerät (1) nach Anspruch 12, wobei das Antriebsmittel einen einzelnen Antrieb aufweist.

14. Personenfluggerät (1) nach Anspruch 12, wobei das Antriebsmittel einen doppelten Antrieb aufweist.

15. Personenfluggerät (1) nach Anspruch 12, wobei das Antriebsmittel einen Antrieb aufweist, der aus der Gruppe, die aus Kettenantrieben, Fluidantrieben und Riemenantrieben besteht, ausgewählt wird.

16. Personenfluggerät (1) nach Anspruch 12, wobei das Antriebsmittel ein Zahnriemenantrieb ist.

17. Personenfluggerät (1) nach Anspruch 12, wobei das Antriebsmittel ein Mikrokeilriemenantrieb ist.

18. Personenfluggerät (1) nach einem der vorangegangenen Ansprüche, wobei das Gerät aus nur einem einzelnen Paar Mantelpropellern (7, 8) und einer einzelnen Maschine (6) besteht.

19. Personenfluggerät (1) nach einem der vorangegangenen Ansprüche, ferner einen an das Gehäuse (4) gekoppelten Fallschirm aufweisend.

20. Personenfluggerät (1) nach einem der vorangegangenen Ansprüche, wobei jeder Propeller (7, 8) innerhalb eines Mantels (9, 10) montiert ist, wobei das Gerät ferner eine Gruppe Leitschaufeln (12) aufweist, die in jedem Propellermantel angeordnet ist, um den jenen Propeller verlassenden Luftstrom zu richten.

21. Personenfluggerät (1) nach Anspruch 20, wobei die Leitschaufeln (12) jeder Gruppe mit einem Ende an einer Innenwand des Mantels (9, 10) befestigt sind und mit einem anderen Ende an einer Nabe des Propellers (7, 8) innerhalb des Mantels befestigt sind.

22. Personenfluggerät (1) nach Anspruch 20, wobei jede Leitschaufel (12) eine flache, parallelseitige Platte ist.

23. Personenfluggerät (1) nach Anspruch 20, wobei jede Leitschaufel (12) einen gekrümmten Flügelquerschnitt aufweist.

24. Personenfluggerät (1) nach Anspruch 1, ferner einen Mantel (9, 10) aufweisend, der jeden Propeller (7, 8) umgibt.

25. Personenfluggerät (1) nach Anspruch 24, wobei jeder Mantel (9, 10) relativ zum Gehäuse (4) fixiert ist.

26. Personenfluggerät (1) nach Anspruch 24, ferner eine Gruppe Leitschaufeln (12) aufweisend, die zu jedem Propeller (7, 8) gehört und angeordnet ist, um den jenen Propeller verlassenden Luftstrom zu richten.

27. Personenfluggerät (1) nach Anspruch 24, ferner ein Steuerruder (18) zum Steuern eines von einem der Propeller (7, 8) erzeugten Luftstroms aufweisend, um das Gerät zu steuern.

28. Personenfluggerät (1) nach Anspruch 27, ferner ein zweites Steuerruder (18) zum Steuern eines vom anderen der Propeller (7, 8) erzeugten Luftstroms aufweisend, um das Gerät zu steuern.

29. Personenfluggerät (1) nach Anspruch 28, wobei jedes Steuerruder (18) am Mantel (9, 10) des Propellers (7, 8), dessen Luftstrom jenes Ruder steuert, montiert ist.

## Revendications

1. Dispositif de vol personnel (1) qui inclut :
- un boîtier (4) apte à être attaché à un pilote ;
- au moins une paire de soufflantes (7, 8), une soufflante de la paire étant montée sur un côté du boîtier (4), et l'autre soufflante de la paire étant montée sur l'autre côté du boîtier ; dans lequel chaque soufflante (7, 8) tourne autour d'un axe de rotation ; **caractérisé en ce que** l'axe de rotation de chaque soufflante est fixé par rapport au boîtier (4) ; et
- au moins un moteur (6) est monté sur le boîtier (4) pour entraîner les soufflantes (7, 8), de sorte que les deux soufflantes tournent dans le même sens pour produire une poussée.

2. Dispositif de vol personnel (1) selon la revendication 1, dans lequel chaque soufflante (7, 8) est attachée au boîtier (4) de sorte que l'axe de rotation de chaque soufflante est sensiblement vertical lorsque le dispositif est attaché à un pilote se tenant debout.

3. Dispositif de vol personnel (1) selon la revendication 1 ou la revendication 2, comprenant en outre une ailette directrice (18) couplée à au moins une soufflante (7, 8), ladite ailette pouvant être commandée pour diriger l'écoulement d'air quittant la au moins une soufflante.

4. Dispositif de vol personnel (1) selon la revendication 3, dans lequel l'ailette directrice (18) comprend une plaque ayant une section transversale à profil aérodynamique et montée diamétralement à travers un bord inférieur (9a, 10a) d'un carénage (9, 10) entourant ladite au moins une soufflante (7, 8).

5. Dispositif de vol personnel (1) selon la revendication 3, dans lequel le boîtier (4) incorpore :
- un support pour une commande par manette (16) ; et
- une commande (17, 19) pour l'ailette directrice (18).

6. Dispositif de vol personnel (1) selon la revendication 5, dans lequel le support de commande par manette (16) et la commande (17, 19) pour l'ailette directrice (18) sont montés sur des accoudoirs (14, 15) s'étendant à partir du boîtier (4).

7. Dispositif de vol personnel (1) selon l'une quelconque des revendications précédentes, dans lequel le boîtier (4) comprend un bouclier protecteur (13) pour protéger le pilote du moteur (6) et des soufflantes (7, 8).

8. Dispositif de vol personnel (1) selon l'une quelconque des revendications précédentes, dans lequel le boîtier (4) comprend un harnais pour attacher le dispositif à un pilote.

9. Dispositif de vol personnel (1) selon l'une quelconque des revendications précédentes, dans lequel chaque soufflante (7, 8) est une soufflante carénée comprenant un carénage (9, 10) entourant la soufflante et définissant une admission.

10. Dispositif de vol personnel (1) selon la revendication 9, dans lequel ladite admission est recouverte d'une grille.

11. Dispositif de vol personnel (1) selon l'une quelconque des revendications précédentes, dans lequel le moteur (6) est choisi parmi le groupe constitué de moteurs à combustion interne à deux temps, de moteurs à combustion interne à quatre temps, de moteurs rotatifs et de moteurs à turbine à gaz.

12. Dispositif de vol personnel (1) selon l'une quelconque des revendications précédentes, comprenant en outre des moyens d'entraînement entraînés par le au moins un moteur (6), lesdits moyens d'entraînement entraînés entraînant la au moins une paire de soufflantes (7, 8).

13. Dispositif de vol personnel (1) selon la revendication 12, dans lequel les moyens d'entraînement comprennent un entraînement simple.

14. Dispositif de vol personnel (1) selon la revendication 12, dans lequel les moyens d'entraînement comprennent un entraînement double.

15. Dispositif de vol personnel (1) selon la revendication 12, dans lequel les moyens d'entraînement comprennent un entraînement choisi parmi le groupe constitué d'entraînements par chaîne, d'entraînements par fluide et d'entraînement par courroie.

16. Dispositif de vol personnel (1) selon la revendication 12, dans lequel les moyens d'entraînement sont un entraînement par courroie crantée.

17. Dispositif de vol personnel (1) selon la revendication 12, dans lequel les moyens d'entraînement sont un entraînement par courroie micro-V.

18. Dispositif de vol personnel (1) selon l'une quelconque des revendications précédentes, dans lequel le dispositif consiste uniquement en une seule paire de soufflantes carénées (7, 8) et un seul moteur (6).

19. Dispositif de vol personnel (1) selon l'une quelconque des revendications précédentes, comprenant en outre un parachute couplé au boîtier (4).

20. Dispositif de vol personnel (1) selon l'une quelconque des revendications précédentes, dans lequel chaque soufflante (7, 8) est montée à l'intérieur d'un carénage (9, 10), dans lequel le dispositif comprend en outre un ensemble de stators (12) agencés dans chaque carénage de soufflante pour renforcer l'écoulement d'air quittant cette soufflante.

21. Dispositif de vol personnel (1) selon la revendication 20, dans lequel les stators (12) de chaque ensemble ont une extrémité fixée à une paroi intérieure du carénage (9, 10) et une autre extrémité fixée à un moyeu de la soufflante (7, 8) à l'intérieur du carénage.

22. Dispositif de vol personnel (1) selon la revendication 20, dans lequel chaque stator (12) est une plaque à faces parallèles plates.

23. Dispositif de vol personnel (1) selon la revendication 20, dans lequel chaque stator (12) comprend une section transversale courbe à profil aérodynamique.

24. Dispositif de vol personnel (1) selon la revendication 1, comprenant en outre un carénage (9, 10) entourant chaque soufflante (7, 8).

25. Dispositif de vol personnel (1) selon la revendication 24, dans lequel chaque carénage (9, 10) est fixé par rapport au boîtier (4).

26. Dispositif de vol personnel (1) selon la revendication 24, comprenant en outre un ensemble de stators (12) associés à chaque soufflante (7, 8) et agencés pour renforcer l'écoulement d'air quittant cette soufflante.

27. Dispositif de vol personnel (1) selon la revendication 24, comprenant en outre une ailette directrice (18) pour guider un écoulement d'air généré par l'une des soufflantes (7, 8) pour guider le dispositif.

28. Dispositif de vol personnel (1) selon la revendication 27, comprenant en outre une seconde ailette directrice (18) pour diriger un écoulement d'air généré par l'autre desdites soufflantes (7, 8) pour diriger le dispositif.

29. Dispositif de vol personnel (1) selon la revendication 28, dans lequel chaque ailette directrice (18) est montée sur le carénage (9, 10) de la soufflante (7, 8) dont ladite ailette dirige l'écoulement d'air.
